# EUROPÄISCHE PATENTSCHRIFT

(11) **EP 3 529 185 B1**
(45) Veröffentlichungstag und Bekanntmachung des Hinweises auf die Patenterteilung: **13.01.2021**
(21) Anmeldenummer: 17794910.4
(22) Anmeldetag: 19.10.2017
(51) Int. Cl.: B29C 31/08, B65H 5/22, B29C 70/38

(54) **TAPELEGEVORRICHTUNG UND TAPELEGEVERFAHREN ZUM FLEXIBLEN UND SCHNELLEN LEGEN VON TAPES MIT UNTERSCHIEDLICHER BREITE**
TAPE-LAYING DEVICE AND TAPE-LAYING METHOD FOR FLEXIBLY AND QUICKLY LAYING TAPES WITH DIFFERENT WIDTHS
DISPOSITIF ET PROCÉDÉ DE POSE DE BANDE PERMETTANT UNE POSE FLEXIBLE ET RAPIDE DE BANDES DE DIFFÉRENTES LARGEURS

(30) Priorität: 19.10.2016 DE 102016119940
(43) Veröffentlichungstag der Anmeldung: 28.08.2019
(73) Patentinhaber: Dieffenbacher GmbH Maschinen- und Anlagenbau, 75031 Eppingen (DE)
(72) Erfinder: GRAF, Matthias, 75031 Eppingen (DE); HELLMEIER, Felix, 75031 Eppingen (DE); JUNG, Klaus, 75031 Eppingen (DE)
(74) Vertreter: Lemcke, Brommer & Partner Patentanwälte Partnerschaft mbB
(86) Internationale Anmeldenummer: PCT/EP2017/076743
(87) Internationale Veröffentlichungsnummer: WO 2018/073359

(56) Entgegenhaltungen:
- WO-A2-2009/042225
- DE-A1-102012 203 388
- US-A- 6 159 326

## Beschreibung

Die vorliegende Erfindung bezieht sich auf eine Tapelegevorrichtung nach dem Oberbegriff des Anspruch 1 sowie auf ein Tapelegeverfahren zum Aufbau eines Laminats für beispielsweise Automobilbauteile nach dem Oberbegriff des Anspruchs 12.

Die Anwendungen für Faserverbundwerkstoffe sind über die vergangenen Jahrzehnte immer weiter gestiegen, insbesondere wenn sie als preiswerte Alternative zu den metallischen Werkstoffen gesehen werden konnten, mit den Vorteilen der Gestaltungsfreiheit und anwendungsspezifischer Formulierungsmöglichkeiten. Speziell der Werkstoff CFK (Carbonfaserverstärkter Kunststoff) hat ein extrem hohes Leichtbaupotential, wobei er sich zugleich durch seine hohe Festigkeit und sehr hohe Struktursteifigkeit auszeichnet. Letzteres ist beispielsweise im Automobilbau ein wichtiges Kriterium.

Die heutigen Entwicklungstätigkeiten für Produktionsanlagen zur Verarbeitung von Faserverbundwerkstoffen reichen daher von reiner Maschinenentwicklung bis hin zu schlüsselfertigen Produktionssystemen. Erstere umfassen für gewöhnlich Preform-Herstelleinheiten, Presseinheiten und ggf. Injektionseinheiten sowie Nachbearbeitungseinheiten - letztere die entsprechende Automatisation für das Preform-Handling, die Werkzeugreinigung, die Bauteilentnahme und dergleichen mehr.

Die automatisierbare Herstellung der Preform stellt eine Schlüsseltechnologie im Herstellungsprozess von endlosfaserverstärkten Faserverbundbauteilen zur Realisierung einer effizienten Großserienfertigung mit reproduzierbarer stabiler Bauteilqualität dar. Aber auch bei sogenannten Hybridbauteilen, also formgepressten Blechen, die vornehmlich mit Carbonfaser-Halbzeugen verpresst werden, um kritische Belastungszonen zusätzlich zu verstärken, müssen sich alle Produktions-Einheiten anlagen- und steuerungstechnisch integrieren lassen, wenn eine hinreichende Produktivität erreicht werden soll.

Zur Herstellung von endlosfaserverstärkten Bauteilen werden heute überwiegend textile Faser-Halbzeuge wie mit einem Binder (Schmelzkleber) benetzte und/oder mit einer Matrix teilweise oder vollständig imprägnierte Faser-Garne und/oder Flächengebilde (sog. Prepregs) wie Fasergewebe, Fasergestricke, Fasergelege oder Fasermatten verwendet. Die Matrix von faserverstärkten Kunststoffen hat die Aufgabe, die hochbelastbaren Fasern einzubetten (Stützfunktion) und deren Zwischenraum vollständig auszufüllen (Sperrfunktion).

An Binder- und/oder Matrix-Werkstoffen können grundsätzlich Materialien aus den Gruppen der Thermoplaste oder der Duroplaste und ggf. zusätzlicher elastifizierender Komponenten, wie Elastomere, eingesetzt werden, welche sich in der Festigkeit, der maximalen Dehnung, der Einsatztemperatur, der Verarbeitungsgeschwindigkeit und der Chemikalienbeständigkeit unterscheiden. Duroplastische Formmassen lassen sich durch Temperatureinwirkung plastifizieren, sind in diesem Moment formbar und härten dann irreversibel unter Druck und Temperatur aus. Im Gegensatz zu den Thermoplasten bestehen die Elastomere und Duroplaste (auch Duromere genannt) nach der Verarbeitung, d. h. im gebrauchsfertigen Zustand, aus mehr oder weniger stark vernetzten Makromolekülen, die in der Regel weder schmelzbar noch löslich sind.

Aus diesen Halbzeugen, die als Rollen oder Plattenware in Standardformaten zur Verfügung stehen, werden in einem Schneidprozess Zuschnitte erzeugt, die in der Regel das umgeformte Bauteil vollflächig auskleiden. Beim Schneiden der Zuschnitte entsteht, je nach Bauteilgeometrie ein signifikanter Schneidabfall, der nicht verarbeitet werden kann und die Effizienz dieses Prozesses erheblich verschlechtert.

Zur Verbesserung der Ressourceneffizienz können endlosfaserverstärkte Bauteile über Faser- oder auch als Tape-Legeverfahren bekannt gewordene Verfahren wesentlich verschnittärmer bzw. verschnittfrei hergestellt werden. Speziell die Verwendung von Tapes aus thermoplastischen Endlosfasern erweist sich als eine sehr attraktive Prozessvariante. Hierbei stellt insbesondere das Legen des für gewöhnlich als Tape vorliegenden Faserverbundwerkstoffes zum Aufbau eines Laminats eine besondere Herausforderung dar.
Mit einem "Tape" ist im Zusammenhang mit der vorliegenden Erfindung vorzugsweise jegliche Art von bahnförmigem Material, insbesondere ein Prepregmaterial, das beispielsweise eine Breite zwischen 30 und 200 mm aufweist, gemeint, welches für ein Ablegen mittels einer Tapelegevorrichtung geeignet ist. Mit "Prepegmaterial" sind vorliegend insbesondere Fasergarne (Rovings), Fasergelege und/oder Fasergewebe gemeint, welche mit einem Binder benetzt und/oder mit einer Matrix, beispielsweise einer Duroplastmatrix oder Thermoplastmatrix, teilweise oder vollständig imprägniert, insbesondere vorimprägniert, sind.

Bei den "Fasern" handelt es sich insbesondere um Kohlenstofffasern, der Begriff "Fasern" umfasst aber in gleicher Weise auch Glasfasern oder andere, insbesondere natürliche oder künstlich hergestellte, Fasern.

Das Tape kann auf einem Trägermaterial angeordnet sein, insbesondere einer Trägerfolie oder einem Trägerpapier, das während des Ablegens des Tapes zum Aufbau des Laminats sich von dem Trägermaterial löst, wobei das Trägermaterial mittels einer geeigneten Einrichtung der Tapelegevorrichtung beseitigt, beispielsweise aufgewickelt, wird. Bevorzugt können jedoch auch Tapes Verwendung finden, die keine Trägermaterialien mehr benötigen.

Zur Verarbeitung von Tapes ist bekannt, diese von einer Spule oder Rolle abzuziehen, auf Länge zu schneiden und auf einen Legetisch bzw. einer bereits auf dem Legetisch abgelegten Tapestruktur abzulegen. Mit dem Ablegen eines Tapestreifens bzw. von Tapes wird dieser über eine Anzahl an Ultraschall-Schweißköpfen punktweise mit der darunter liegende Tapeschicht verbunden.

Zur Verarbeitung von Tapes und zur Durchführung eines Tape-Legeverfahrens werden vielfach automatische Vorrichtungen eingesetzt, welche in der Lage sind, ein Tape strukturiert abzulegen. Bekannt sind insbesondere sog. Tapelegevorrichtungen, unter welchen vorliegend beispielsweise auch eine sog. Fiber-Placement-Vorrichtung zu verstehen ist.

Eine beispielhafte Tapelegevorrichtung ist aus dem Dokument WO 2014/083196 A1 bekannt, das eine Tapelegevorrichtung beschreibt, die mit zwei Legekopfeinheiten konfiguriert ist. Die Legekopfeinheiten sind so angeordnet, dass sie für einen einzelnen Legetisch zugänglich sind. Die Legekopfeinheiten sind voneinander unabhängig und jeweils mit einer eigenen Material-Zuführungseinheit, Schneideinrichtung, Greifmittel mit zugehörigem Linearantrieb, Führungsbahnen und Bandhefteinheit konfiguriert. In dieser Konfiguration kann ein Bandabschnitt auf Länge gezogen, in Führungsbahnen positioniert und mit der ersten Legekopfeinheit auf dem zu produzierenden Teil in Position geheftet werden, während gleichzeitig der nächste Bandabschnitt auf Länge gezogen und auf der zweiten Legekopfeinheit in den Führungsbahnen positioniert wird. Nachdem der erste Bandabschnitt von der ersten Legekopfeinheit angeheftet wurde, befördert der Legetisch das zu produzierende Teil zur zweiten Legekopfeinheit, währenddessen der nächste Bandabschnitt vorbereitet und in Position gebracht ist, um am zu produzierenden Teil angeheftet zu werden.

Die US 8,048,253 B2 beschreibt ebenfalls eine Tapelegevorrichtung mit einem Legekopf, wobei ein Tape-Bandmaterial einer Schneideinrichtung zugeführt wird, welche einen Tapestreifen bzw. ein Tape abtrennt, der anschließend mit dem Legekopf auf die Bearbeitungsfläche eines Legetisches platziert wird. Das Tape-Bandmaterial und das abgetrennte Tape werden in dem Legekopf dabei jeweils in Führungsschienen geführt, die zu beiden Seiten des Bandes bzw. des Tapes angeordnet sind, wobei die Kanten des Bandes bzw. des Tapes in Nuten, die in den Führungsschienen vorgesehen sind, gehalten werden. Das Dokument beschreibt auch, dass mehrere Legeköpfe vorgesehen sein können, so dass es möglich wird, mehrere Tapes bzw. Tapestreifen gleichzeitig abzulegen.

Bei beiden dieser bekannten Tapelegevorrichtungen besteht der Nachteil, dass wegen dem nur seitlichen Führen und Halten der Tapes mittels der Führungsschienen das zu verarbeitende Tape-Bandmaterial eine hinreichend hohe innere Steifigkeit aufweisen muss, so dass es nicht dazu kommt, dass das Tape-Bandmaterial durchhängt und aus den Führungsschienen fällt. Dies kann eine unerwünschte Einschränkung hinsichtlich der verarbeitbaren Materialien, Dicken und/oder Breiten darstellen.

Auch kann wegen dem nur relativ losen Halten der Tapes mittels der seitlichen Führungsschienen die Taktzeit nicht beliebig erhöht werden. Dies liegt daran, dass bei einer zu raschen Bewegung beim Absenken des Legekopfs, bei der dementsprechend das Tape rasch gegen den Widerstand der umgebenden Luft bewegt werden muss, sich die Gefahr, dass das Tape aus den Führungsschienen "geweht" wird und herausfällt, signifikant erhöhen kann.

Für die Verlegung von großflächigen Fasergeweben beschreibt das Dokument WO 2012/156524 A1 ein Verfahren zum Transportieren einer aus einem flächigen Fasergewebe ausgeschnittenen Faserkontur im Zuge der Herstellung von faserverstärkten Kunststoff-Formteilen. Dabei wird eine Faserkontur auf einem Schneidtisch ausgeschnitten. Anschließend verfährt ein Sauggreifer über die Faserkontur und bringt eine Transportplatte in Kontakt mit der ausgeschnittenen Faserkontur. Mittels an der Transportplatte angeordneten Saugvorrichtungen wird die Faserkontur an der Transportplatte fixiert und von dem Schneidtisch abgehoben. Die Saugvorrichtungen arbeiten nach dem Bernoulli-Prinzip, wobei durch die Druckluftzufuhr entstehenden Luftströmungen der Saugvorrichtungen von dem Trennschnitt der Faserkontur weggeführt werden. Der Sauggreifer ist an einem Manipulator wie einem Industrieroboter befestigt. Ein vergleichbares Prinzip eines Sauggreifers, der zum Aufnehmen von großflächigen Fasergeweben dient und an einem Industrieroboter befestigt ist, ist auch aus dem Dokument DE 10 2013 208 778 A1 bekannt, das einen Sauggreifer in Form einer Stabsystemanordnung aus winkelig verkreuzten und parallelogrammartig verschiebbaren Stäben beschreibt. An der Gitterstruktur sind Sauggreifer, die einen Coanda-Effekt nutzen, variabel positionierbar angeordnet.

Diese beiden Dokumente beschreiben groß bauende Sauggreifer, die sich nicht für eine Anwendung in einer Tapelegevorrichtung, wie beispielsweise in den oben genannten Dokumenten WO 2014/083196 A1 und US 8,048,253 B2 beschrieben, eignen. Dies insbesondere aus dem Grund, dass sich diese groß bauenden Sauggreifer als Endeffektoren an einem Industrieroboter nicht mit hinreichender Geschwindigkeit bewegen lassen, um die derzeit und in Zukunft bestehenden Anforderungen an eine Legerate auch beim Legen schmaler und schmalster Tapes erfüllen zu können. Daneben besteht das Problem, dass bei einer raschen Bewegung auf Grund der hohen bewegten Massen mit einem erheblichen Energieeinsatz, und damit einhergehend hohen Betriebskosten gerechnet werden muss. Auch ist es nicht möglich, zur Erzielung einer Taktzeit von beispielsweise einer Sekunde oder kürzer, mit den Sauggreifern eine Saugwirkung hinreichend schnell und zuverlässig einzuschalten und, nach Ablegen eines Tapes, wieder abzuschalten. Auch ist wegen der Baugröße von Sauggreifern und Industrierobotern eine Parallelisierung des Tapelegens durch Vorsehen von zwei, drei, vier oder mehr Legeeinheiten nicht oder nur begrenzt und mit hohem baulichem Aufwand mit entsprechend hohen Anlagenkosten möglich.

Es ist daher eine Aufgabe der Erfindung, eine verbesserte Tapelegevorrichtung und ein verbessertes Tapelegeverfahren anzugeben, welches die vorstehenden Nachteile überwindet.

Es ist eine nochmals weitere Aufgabe der Erfindung, eine verbesserte Tapelegevorrichtung und ein verbessertes Tapelegeverfahren anzugeben, welche flexibel und rasch zum effizienten Ablegen von Tape-Bandmaterial unterschiedlicher Breiten eingesetzt werden können.

Es ist eine nochmals weitere Aufgabe der Erfindung, eine verbesserte Tapelegevorrichtung und ein verbessertes Tapelegeverfahren anzugeben, welche eine hohe Orts-Genauigkeit bei der Ablage von Tapes ermöglicht.

Es ist eine nochmals weitere Aufgabe der Erfindung, eine verbesserte Tapelegevorrichtung und ein verbessertes Tapelegeverfahren anzugeben, die mit geringen Anlagenkosten und Betriebskosten eingesetzt werden können.

Als eine erste Lösung wird eine Tapelegevorrichtung angegeben umfassend eine Materialzufuhreinheit zum Zuführen von Tapes, eine Legeeinrichtung zum Aufnehmen und zum Platzieren von Tapes auf einem Legetisch, wobei die Legeeinrichtung ein Transportmittel und eine Vakuumeinrichtung umfasst, die Vakuumeinrichtung derart mit dem Transportmittel verbunden ist, so dass zumindest ein Tape mittels der von der Vakuumeinrichtung erzeugtem Unterdruck an dem Transportmittel gehalten werden kann, wobei das Transportmittel durch mindestens zwei, um Umlenkrollen umlaufende, endlose Transportbänder gebildet ist, wobei die Transportbänder parallel zueinander in der gleichen Transportebene verlaufen.

Die Verwendung von zumindest zwei, um Umlenkrollen umlaufende, endlose Transportbänder erlaubt es Tapes unterschiedlicher Breite mittels der Transportbänder zu transportieren. Ein Einstellen der jeweiligen Legeeinrichtung auf die zu verarbeitende Tapebreite kann entfallen, da die Tapes mit einer Fläche an den Transportbändern anliegend geführt werden. Durch den Transport an den Transportbändern kann das Tape ohne es mechanisch berühren zu müssen, beispielsweise mittels eines Greifers oder in den Führungsschienen, transportiert werden. Bei der Ausgestaltung des Transportmittels durch zumindest zwei Transportbänder kann nun gezielt auf unterschiedliche Tapebreiten reagiert werden, indem der Abstand zwischen den Transportbändern beispielsweise veränderbar ist. Weiterhin können auch bei Bedarf einzelne Transportbänder hinzugeschaltet oder stillgelegt werden, um nur so viele Transportbänder zu betreiben, welche für den Transport der einzelnen Tapes auch nur notwendig sind. Hierdurch kann insbesondere der Energieeinsatz verbessert werden. Das zu transportierende Tape wird durch die Transportbänder nur an einer kleinen Fläche berührt, welche jedoch ausreichend für einen sicheren Transport des Tapes ist, aber geleichzeitig auch einen schonenden und die Eigenschaften des Tapes nicht verändernden Transport für das Tape ermöglicht.

In einer bevorzugten Ausführung sind Transportbänder über gemeinsame oder getrennte Umlenkrollen geführt. Neben der Führung und Lenkung der Transportbänder, ist zumindest eine Umlenkrolle angetrieben um eine Bewegung der Transportbänder zu ermöglichen. Bei einer Führung aller Transportbänder um gemeinsame Umlenkrollen kann sichergestellt werden, dass diese immer gleich angetrieben werden. Um eine Überlappung der einzelnen Transportbänder während ihrer Bewegung zu vermeiden, wäre es sinnvoll, dass ein Verlaufen der einzelnen Transportbänder auf einer gemeinsamen Umlenkrolle beispielsweise durch eine Führung unterbunden wird. Um die Möglichkeit einer Überlappung der Transportbänder zu unterbinden, kann jedes Transportband um seine jeweiligen, ihm alleine zugeordneten Umlenkrollen geführt sein. Damit wäre auch eine unterschiedliche Ansteuerung der Transportbänder denkbar, so dass abhängig von der Breite der Tapes nur die zum Transport jeweilig notwendigen Transportbänder betrieben werden. Werden mehrere Transportbänder, welche nicht über die gleichen Umlenkrollen verlaufen, gleichzeitig betrieben, so wäre eine Synchronisation der Antriebe der Transportbänder vorteilhaft.

Eine vorteilhafte Ausführungsform der Erfindung zeichnet sich dadurch aus, dass in den Transportbändern Öffnungen angeordnet sind. Über die Öffnungen wird Luft in die Vakuumkammer angesaugt, so dass an der Oberfläche der Transportbänder ein Unterdruck entsteht, welcher den Transport der Tapes sowohl liegend als auch hängend ermöglicht.

Vorzugsweise beträgt die Öffnungsfläche der Öffnungen von 10 bis 100 mm², höchst bevorzugt von 25 bis 60 mm².

Bevorzugt beträgt der Druckunterschied zwischen Vakuumeinrichtung und Umgebung geringer 100 mbar, vorzugsweise geringer 75 mbar, besonders bevorzugt geringer 50 mbar. Gerade die Verwendung von zur Breite des Transportbandes gesehen relativ großen Öffnungen im Transportband und damit einer sich ergebenen großen Menge an zu bewegender Luft in Verbindung mit einem relativ geringen Druckunterschied erlaubt es nicht nur, dass die Tapes an der Legeeinrichtung gehalten werden, sondern bietet noch den Vorteil, dass auch gebogene Kanten oder tordierte Tapes prozesssicher an die Legeeinrichtung angesaugt und gehalten werden.

Alternativ wäre auch die Verwendung eines Transportbandes aus einem Gewebe möglich, welches durch seinen Aufbau von Natur aus eine Durchlässigkeit für ein gasförmiges Medium bereithält.

Bevorzugt weisen die Umlenkrollen auf Ihrer dem Transportband zugewandten Oberfläche Noppen auf. Die Transportbänder verlaufen über die Noppen, wodurch der Schlupf zwischen Band und Umlenkrolle reduziert wird gegenüber der Verwendung einer oder mehrerer glatter Umlenkrollen. Durch eine Reduzierung des Schlupf zwischen der vorzugsweise angetriebenen Umlenkrolle und dem Transportband bzw. der Transportbänder wird auch gleichzeitig die Genauigkeit der Ablage von Tapes auf dem Legetisch verbessert.

In einer weiteren Ausgestaltung der Erfindung kann vorgehsehen sein, dass die Noppen auf der Umlenkrolle und die Öffnungen in den Transportbändern derart ausgebildet sind, so dass die Noppen in die Öffnungen hineingreifen. Insbesondere stimmen die Abstände der Noppen auf den Umlenkrollen bezogen auf den Wirkdurchmesser mit den Abständen der Öffnungen in den Transportbändern überein. Durch das Hineingreifen der Öffnungen des Transportbandes bzw. der Transportbänder ergibt sich eine formschlüssige Verbindung zwischen Transportband und der vorzugsweise angetriebenen Umlenkrolle, welche sich sowohl in Querrichtung als auch in Längsrichtung des Transportbandes erstreckt. Hierdurch lässt sich eine Legegenauigkeit bei der Ablage von Tapes auf dem Legetisch von 0,1 mm oder weniger erzielen. Eine seitliche Führung des Transportbandes in Führungsschienen oder das Führen des Transportbandes mittels einer auf dem Transportband aufgebrachten Führungskante um das Transportband auf einer gewissen Spur zu halten ist nicht mehr notwendig. Gerade bei sehr dünnen Transportbändern ist zudem eine seitliche Führung schwer umsetzbar, da einerseits der Verschleiß durch Reibung sehr groß sein kann und andererseits bei zu laxer Führung die Transportbänder sich verbiegen können.

Vorzugsweise sind die Noppen halbkugelförmig ausgebildet. Durch eine halbkreisförmige Ausbildung wird erzielt, dass die Noppen bei der Führung in der Umlenkrolle über das Transportband hinausragen und das Transportband entlang des Wirkdurchmessers sicher geführt wird und nicht aus der Führung hinausspringen kann. Andererseits bietet eine halbkugelförmige Ausgestaltung der Noppen auch den Vorteil, dass die Öffnungen des Transportbandes auf die Noppen geführt wird, auch wenn die Position von Noppen und Öffnungen nicht ganz exakt aufeinander abgestimmt sind.

Alternativ oder in Kombination zu den vorgenannten Ausführungsformen sind die Transportbänder auf die gleiche Länge gespannt. Durch die gleiche Länge wird sichergestellt, dass die Transportbänder auch stets gleich laufen und es zwischen den Transportbändern keinen Versatz gibt, beispielsweise wenn ein Tape sich über mehrere Transportbänder erstreckt.

Eine vorteilhafte Ausführungsform sieht vor, dass die Transportbänder aus einem Metall oder einer Legierung mit einer hohe Steifigkeit sind, vorzugsweise Stahl.

In einer weiteren bevorzugten Ausgestaltung der Erfindung umfasst die Vakuumeinrichtung mehrere Vakuumbalken, welche den einzelnen Transportbändern zugeordnet sind. Vorzugsweise bilden die Vakuumbalken einen Spalt zueinander aus, dessen Breite vorzugsweise veränderbar ist. Die Unterteilung der Vakuumeinrichtung in mehrere Vakuumbalken erlaubt den Aufbau eines modularen Systems, bei welchem jedem Transportband ein jeweiliger Vakuumbalken zugeordnet ist. Die einzelnen Vakuumbalken können jeweils eine eigene Einrichtung zur Erzeugung eines Unterdrucks aufweisen oder an eine gemeinsame Einrichtung zur Erzeugung eines Unterdrucks angeschlossen sein, wobei die Verbindung der einzelnen Vakuumbalken mit der Einrichtung zur Erzeugung eines Unterdrucks bei Bedarf unterbrochen werden kann.

Vorzugsweise sind im Spalt zwischen zwei Vakuumbalken weitere Mittel angeordnet.

Die im dem Spalt zwischen zwei Vakuumbalken angeordneten Mittel können vorzugsweise gebildet sein durch Hefteinheiten zum Anheften von Tapes an eine bereits abgelegte Tapestruktur und/oder Pressmittel zum Andrücken von Tapes auf den Legetisch oder auf eine bereits abgelegte Tapestruktur und/oder Abtrennmittel zum Abtrennen der Tapes von den Transportbändern und/oder Erwärmungsmittel zum Erwärmen des abzulegenden Tapes oder der bereits abgelegten Tapestruktur. Die weiteren Mittel sollten vorzugsweise heb- und absenkbar sein, so dass der Transport eines an den Transportbändern hängenden Tapes kontinuierlich und störungsfrei erfolgen kann. Bei Bedarf können die Mittel dann in Richtung des Legetisches bzw. des oder der abgelegten Tapes verfahren werden und ihrer jeweiligen Aufgabe, beispielsweise dem Verbinden von dem gerade abgelegten Tape mit einer bereits abgelegten Tapestruktur, nachkommen. Weiterhin können die Mittel auch in horizontaler Richtung bewegt werden.

Als eine weitere Lösung wird ein Tapelegeverfahren angeben, umfassend die folgenden Verfahrensschritte:
Zuführen von Tapes mittels einer Materialzufuhreinheit; und Aufnehmen und Platzieren von Tapes auf einem Legetisch mittels einer Legeeinrichtung, welche ein Transportmittel und eine Vakuumeinrichtung umfasst, wobei zumindest ein Tape mittels der von der Vakuumeinrichtung erzeugtem Unterdruck an dem Transportmittel gehalten wird, und das Transportmittel durch mindestens zwei, um Umlenkrollen umlaufende, endlose Transportbänder gebildet ist, wobei die Transportbänder parallel zueinander in der gleichen Transportebene verlaufen.

Eine bevorzugte Ausführungsform zeichnet aus, dass die Transportbänder über gemeinsame oder getrennte Umlenkrollen geführt werden.

Eine vorteilhafte Ausgestaltung zeichnet sich dadurch aus, dass die Umlenkrollen auf Ihrer dem Transportband zugewandten Oberfläche Noppen aufweisen, in welche die Öffnungen der Transportbänder hineingreifen. Hierdurch wird zwischen der Umlenkrolle und dem Transportband eine formschlüssige Verbindung ausgebildet, welchen einen optimalen Antrieb und eine optimale Bewegung des Transportbandes mit einer hohen Genauigkeit ermöglicht.

Bevorzugt umfasst die Vakuumeinrichtung mehrere Vakuumbalken, welche den einzelnen Transportbändern zugeordnet sind, wobei vorzugsweise die einzelnen Vakuumbalken je nach Breite der zu transportierenden Tapes zu- und abgeschaltet werden können. Durch die Zu- oder Abschaltung einzelner Vakuumbalken kann der Energieeinsatz zum Transport von Tapes optimiert werden.

Alternativ oder in Kombination können die weiteren Mittel im Zwischenraum zwischen zwei Vakuumbalken horizontal und/oder vertikal verfahren werden. Die weiteren Mittel können somit zwischen den Balken in eine beliebige Position verfahren werden, wobei durch eine vertikale Bewegung dieser stets der Tape-Transport durch die Transportbänder ohne Beeinflussung erfolgen kann.

Die Tapelegevorrichtung wie vorstehend ausgeführt ist zur Ausführung eines Tapelegeverfahrens wie vorstehend ausgeführt ausgebildet, kann jedoch auch eigenständig betrieben werden. Insbesondere kann das Tapelegeverfahren mit einer Tapelegevorrichtung wie vorstehend ausgeführt ebenfalls ausgeübt werden.

Weitere bevorzugte Ausführungsformen sind in den abhängigen Ansprüchen dargelegt. Die Erfindung wird im Nachfolgenden mit Bezug auf die Zeichnungen an Hand von beispielhaften Ausführungsformen beschrieben.

Es zeigen:
- Fig. 1: eine Tapelegevorrichtung;
- Fig. 2: eine Legeeinheit zum Legen von Tapes auf einen Legetisch in einer Seitenansicht;
- Fig. 3: einen Schnitt durch eine Legeeinrichtung einer erfindungsgemäßen Tapelegevorrichtung entlang der Linie A - A der Figur 1; und
- Fig. 4: die Anordnung von zwei Legeeinrichtungen einer Tapelegevorrichtung.

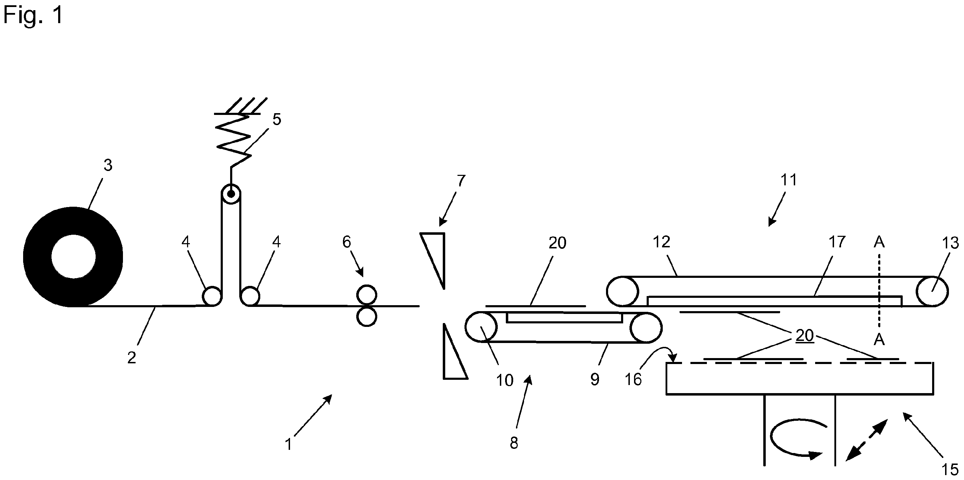

In der Fig. 1 ist eine Tapelegevorrichtung 1 zur Herstellung von faserverstärkten Bauteilen sowie Verstärkungsstrukturen für faserverstärkte Bauteile in einer schematischen Querschnittsansicht dargestellt. Wie in Fig. 1 gezeigt, wird in der Tapelegevorrichtung 1 ein Tape-Material 2, welches vorzugsweise als Tape-Bandmaterial beispielsweise auf einer Spule 3 aufgewickelt bereitgestellt wird, von der Spule 3 abgewickelt und einer Zuführungseinrichtung 8 zugeführt. Zu diesem Zweck ist vor der Zuführungseinrichtung 8 eine Antriebseinrichtung 6 angeordnet, welche in dieser Ausführungsform ein Paar von Antriebswalzen aufweist, die einen Walzenantrieb, auch als Mangelantrieb bezeichnet, bilden, der für den Transport des Tape-Materials 2 sorgt. Die Antriebswalzen der Antriebseinrichtung 6 werden dabei von einem oder von mehreren Motoren (nicht dargestellt) unter Steuerung einer Steuereinrichtung (nicht dargestellt) angetrieben, so dass das Tape-Material 2 mit einer gewünschten Geschwindigkeit und/oder einer gewünschten Länge in die Zuführungseinrichtung 8 "geschoben" und derart zugeführt wird.

Zwischen der Spule 3 und der Antriebseinrichtung 6 wird das Tape-Material 2 über Umlenkrollen 4 geführt. Für einen kontinuierlichen Betrieb der Tapelegevorrichtung 1 ist es notwendig, dass im Bereich der Materialzuführung ein Puffersystem 5 angeordnet ist, welches einen bestimmten Vorrat an Tape-Material 2 aufnehmen kann. So kann in Fällen, in welchen beispielsweise ein Wechsel der Spule 3 notwendig ist, ohne Unterbrechung mit dem im Puffersystem 5 vorhandenen Tape-Material 2 weiter produziert werden, bis eine neue Spule 3 eingesetzt und deren Tape-Material 2 in das System eingefädelt wurde. Das Puffersystem 5 kann als Tänzersystem ausgeführt sein, welches mittels eines oder mehrerer Federsysteme einen Bandvorrat bewirkt.

Im weiteren Verlauf wird vor oder in der Zuführungseinrichtung 8 das Tape-Material 2 mittels einer Schneideinrichtung 7, das beispielsweise als ein Schneidmesser ausgeführt ist, geschnitten, um von dem Tape-Material 2 einzelne Tapes 20 einer jeweils gewünschten Länge abzutrennen. Zum sauberen Schneiden ist es erforderlich, dass die Zuführung an Tape-Material 2 zur Zuführungseinrichtung 8 kurz angehalten wird. Um trotzdem ein kontinuierliches Abwickeln der Spule 3 zu ermöglichen, kann das Puffersystem 5 dieses kurze Abbremsen oder Abstoppen der Bewegung des Tape-Materials 2 auch ausgleichen. Die Schneideinrichtung 7 bzw. das Schneidmesser ist dabei winkelig verstellbar, so dass nicht nur Schnitte quer zur Bandrichtung des Tape-Materials 2 ausgeführt werden können, sondern mittels einer entsprechenden Verstellung der Schneideinrichtung 7 um einen Winkel von beispielsweise ± 45° relativ zur Querrichtung des Tape-Materials 2 auch Tapes 20 abgeschnitten werden können, die in einem entsprechenden, gewünschten Winkel zugeschnitten sind.

Alternativ wäre es ebenfalls denkbar, dass das Tape-Material 2 bereits als Tapes 20 vorliegend in die Zuführungseinrichtung 8 zugeführt werden und ein Schneiden zu Tapes 20 an dieser Stelle nicht mehr notwendig macht.
Nachdem die Tapes 20 derart in der Schneideinrichtung 7 von dem Tape-Material 2 abgetrennt und vereinzelt wurden, oder bereits als vereinzelte Tapes 20 zugeführt wurden, werden die Tapes 20 auf der Zuführungseinrichtung 8 weiter transportiert, welche die Tapes 20 schließlich an eine Legeeinrichtung 11 zuführt und an diese übergibt. In der vorliegenden Ausführungsform sind sowohl die Zuführungseinrichtung 8 als auch die Legeeinrichtung 11 mit einem oder mehreren, um Umlenkrollen 10,13, 13a, 13b geführten Transportbändern 9, 12, 12a, 12b als Transportmittel ausgestattet. In der Zuführungseinrichtung 8 werden dabei die Tapes 20 aufliegend, das heißt, auf einer Oberseite der Zuführungseinrichtung 8 auf dem Transportband 9 aufliegend transportiert. Hingegen werden die einzelnen Tapes 20 in der Legeeinrichtung 11 jeweils "hängend" transportiert. Hierzu ist die Legeeinrichtung 11 mit einer Vakuumeinrichtung 17 versehen, welche den für den Transport notwendigen Unterdruck bereitgestellt, so dass die Tapes 20 an die Unterseite der Legeeinrichtung 11 angesaugt werden können. Es sei dabei bemerkt, dass hierin der Begriff des Vakuums nicht im Sinne eines idealen, vollständigen Vakuums verwendet wird, was einer vollständigen Abwesenheit von Luft oder anderen Gasen entsprechen würde. Vielmehr wird der Begriff des Vakuums hierin im Sinne eines Unterdrucks verwendet, der insbesondere hinreichend ausgeprägt ist, um eine gewünschte und/oder erforderliche Mindesthaltekraft sicher einhalten zu können.

Die Vakuumeinrichtung 17 ist so mit dem Transportband 12, 12a, 12b der Legeeinrichtung 11 verbunden, dass durch das Transportband 12, 12a, 12b hindurch Luft angesaugt und so ein Unterdruck aufgebaut werden kann, beispielsweise indem eine Vielzahl von Öffnungen 14 in dem Transportband 12, 12a, 12b vorgesehen sind, durch welche die Luft angesaugt werden kann. Alternativ kann auch ein Transportband 12, 12a, 12b eingesetzt werden, beisielsweise aus einem Gewebematerial, so dass die Maschen des Gewebematerials die Öffnungen 14 darstellen und eine entsprechende Sog-Wirkung ausgebildet wird, welche zum Ansaugen von Tapes 20 notwendig ist.

Die Legeeinrichtung 11 ist über einem Legetisch 15 angeordnet. Der Legetisch 15 umfasst eine Tischoberfläche 16 mit einer Vielzahl an Öffnungen, welche mit einer (nicht dargestellten) Unterdruckeinrichtung in Wirkverbindung stehen, so dass über die Öffnungen Luft oder andere gasförmige Medien zur Erzeugung eines Unterdruckes angesaugt werden können. Der Legetisch 15 bzw. die Tischoberfläche 16 kann in mehrere Unterdruckkassetten unterteil sein, welche jeweils mehrere Öffnungen umfassen. Je nach Bedarf und Position zur Ablage von Tapes 20 können die einzelnen Unterdruckkassetten zu- und abgeschaltet werden um so den Energieeinsatz zu minimieren und ungewollte Luftströmungen zu vermeiden.

Der Legetisch 15 und/oder die Legeeinrichtung 11 können in vertikaler Richtung relativ zueinander bewegt werden, so dass die Legeeinrichtung 11 jeweils zumindest ein einzelnes Tape 20 auf dem Legetisch 15 platzieren und ablegen kann. Beispielsweise kann eine Linearführung (nicht dargestellt) vorgesehen sein, mittels der die Legeeinrichtung 11 in vertikaler Richtung auf den Legetisch 15 abgesenkt werden kann, um das Tape 20 auf der Tischoberfläche 16 des Legetisches 15, oder einer bereits zuvor auf der Tischoberfläche 16 des Legetisches 15 ausgebildeten Tapestruktur abzulegen, und gegebenenfalls kurz und leicht anzudrücken. Nach dem Ablegen des Tapes 20 wird die Legeeinrichtung 11 wieder angehoben, um ein nächstes Tape 20 aufzunehmen. Es sei hierbei bemerkt, dass im Sinne dieses Dokuments sowohl das Platzieren und Ablegen eines oder mehrerer Tapes 20 auf der Tischoberfläche 16 des Legetisches 15, als auch das Ablegen eines oder mehrerer Tapes 20 auf bereits zuvor auf dem Legetisch 15 abgelegte Tapes 20, insbesondere auf einer zuvor ausgebildeten Tapelage, als ein Platzieren und Ablegen des Tapes 20 auf dem Legetisch 15 verstanden werden soll.

Zur Erhöhung der Legerate ist es insbesondere vorgesehen, dass mehrere Tapes 20 simultan, das heißt, insbesondere zeitgleich und mehrspurig gehandhabt werden, wobei durch eine solche Parallelisierung vorteilhaft die Anzahl gelegter Tapes 20 pro Abfolge entsprechend multipliziert wird. Entsprechend kann in einer Tapelegevorrichtung 1 bevorzugt vorgesehen sein, dass die entsprechenden Einheiten in entsprechend multipler Ausführung vorgesehen sind. So können jeweils zwei Spulen 3 vorgesehen sein, von welchen mittels zwei Antriebseinrichtungen 6 mit insgesamt zwei Paaren von Antriebswalzen zwei Stränge eines Tape-Materials 2 abgezogen und zu zwei jeweiligen Schneideinrichtungen 7 zugeführt werden, wo mittels zweier Schneidmesser zwei jeweilige Tapes 20 abgetrennt und mittels zweier Zuführungseinrichtungen 8 zu zwei Legeeinrichtungen 11 zugeführt werden. Mittels der zwei Legeeinrichtungen 11 können somit zwei Tapes 20 gleichzeitig auf dem Legetisch 15 platziert und abgelegt werden.

Es kann weiter ebenfalls vorgesehen sein, dass, wie bekannt, während des Ablegens von Tapes 20 bereits zuvor abgelegte Tapes 20 zum Beispiel mittels hierzu vorgesehenen Ultraschalleinrichtungen oder anderen Hefteinrichtungen an der oder den darunter liegenden Tapelagen angeheftet werden, beispielsweise durch Plastifizieren, oder zumindest teilweise mit der oder den darunter liegenden Tapelagen zu einem Laminat konsolidiert werden. Dieses Vorgehen kann für jede weitere Tapelage wiederholt werden. Alternativ oder ergänzend ist es auch möglich, die Tapes 20 unmittelbar nachdem sie auf dem Legetisch 15 abgelegt und platziert werden an der oder den darunter liegenden Tapelagen anzuheften, beispielsweise mittels Hefteinrichtungen, insbesondere Ultraschalleinrichtungen, die in den Legeeinrichtungen 11 vorgesehen sind. Die erste Lage an Tapes 20, welche auf dem Legetisch 15 abgelegt wird, wird an dessen Tischoberfläche 16 mittels einer (nichtz dargestellten) Unterdruckeinrichtung, welche in Wirkverbindung mit den Öffnungen auf der Tischoberfläche 16 stehen, gehalten, wobei die Tapes 20 an die Tischoberfläche 16 des Legetisches 15 ansaugt werden.

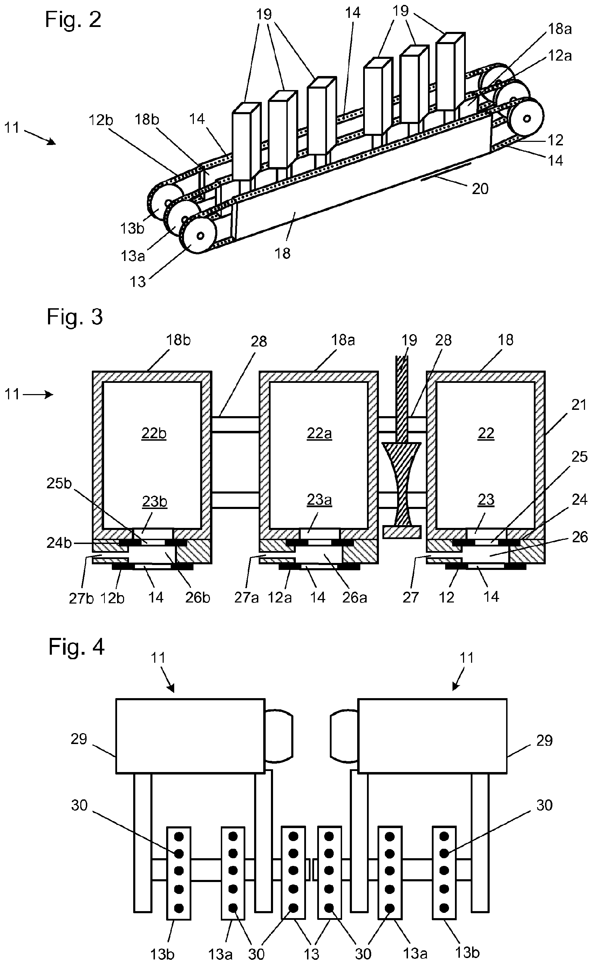

In Fig. 2 ist die Legeeinrichtung 11 zum Legen von Tapes 20 auf einen Legetisch 15 in einer seitlichen Ansicht dargestellt. Die Legeeinrichtung 11 umfasst drei Transportbänder 12, 12a, 12b welche um, jeweils den einzelnen Transportbändern 12, 12a, 12b zugeordneten Umlenkrollen 13, 13a, 13b geführt sind. Ein Tape 20 wird mittels der Transportbänder 12, 12a, 12b, welche eine Breite in einem Bereich von 1 bis 5 cm, vorzugsweise in einem Bereich von 2 bis 4 cm, besonders bevorzugt von 2,5 cm aufweisen, an der Unterseite der Legeeinrichtung 11 "hängend" transportiert. Im vorliegenden Fall ist die Vakuumeinrichtung 17 in einzelne Vakuumbalken 18, 18a, 18b unterteilt, über welche die einzelnen Transportbändern 12, 12a, 12b geführt sind. In den Transportbänder 12, 12a, 12b sind Öffnungen 14 vorgesehen, durch welche Luft in die Vakuumbalken 18, 18a, 18b einsaugt werden kann, damit eine entsprechende Sog-Wirkung an der Oberfläche der Transportbänder 12, 12a, 12b erzielt werden kann. Die Öffnungsfläche der Öffnungen 14 ist dabei relativ groß gewählt zur Breite der Transportbänder und liegt in einem Bereich von 10 bis 100 mm², bevorzugt in einem Bereich von 25 bis 60 mm². Hierdurch wird eine relativ große Luftmenge angesaugt, welche in Verbindung mit einer relativ geringen Druckdifferenz zwischen der Umgebung und dem im Vakuumbalken 18, 18a, 18b herrschenden Unterdruck, dazu führt, dass die Tapes 20 nicht nur an der Legeeinrichtung 11 gehalten werden, sondern regelrecht angesaugt werden. Insbesondere gebogene Kanten von Tapes 20 oder tordierte Tapes 20 können hierdurch prozesssicher an die Legeeinheit 11 übergeben und an dieser gehalten werden.

Die Öffnungen 14 in den Transportbändern 12, 12a, 12b sind dabei so angeordnet, dass diese in an der Oberfläche der Umlenkrollen 13, 13a, 13b angeordnete Noppen 30 zur Ausbildung einer formschlüssigen Verbindung hineingreifen können. Die Abstände der Noppen 30 auf den Umlenkrollen 13, 13a, 13b sind dabei so gewählt, dass diese bezogen auf den Wirkdurchmesser mit den Abständen der Öffnungen 14 in den Transportbändern 12, 12a, 12b übereinstimmen. Der Abstand der Öffnungen 14 liegt dabei in einem Bereich von 0,5 bis 5 cm, bevorzugt in einem Bereich von 1 bis 4 cm, besonders bevorzugt in einem Bereich von 2 bis 3 cm.

Zwischen den Transportbändern 12, 12a, 12b bzw. den Vakuumbalken 18, 18a, 18b ist ein Spalt ausgebildet, in welchem weitere Mittel 19, beispielsweise Hefteinheiten in Form von Ultraschall-Sonotroden, angeordnet sein können. Wird ein Tape 20 auf einer, auf dem Legetisch 15 bereits abgelegten Tapestruktur mittels der Legeeinrichtung 11 abgelegt, so können eine oder mehrere Hefteinheiten ausgefahren werden und das abgelegte Tape 20 mit der bereits abgelegten Tapestruktur verbinden und an der gewünschten Position fixieren. Während der Fixierung des Tapes 20 an einer bereits gelegten Tapestruktur kann bereits ein weiteres Tape 20 in der Legeeinrichtung 11 mittels der Transportbänder 12, 12a, 12b transportiert werden.

Bei den weiteren Mitteln 19 kann es sich neben Hefteinheiten, beispielsweise in Form von Ultraschall-Sonotroden, auch um Pressmittel zum Andrücken von abgelegten Tapes 20 an eine bereits gelegte Tapestruktur oder an die Tischoberfläche 16 des Legetisches 15 und/oder auch um Abtrennmittel zum Abtrennen der Tapes 20 von den Transportbändern 12, 12a, 12b und/oder auch Erwärmungsmittel zum Erwärmen und Plastifizieren von abzulegenden Tapes 20 oder der bereits abgelegten Tapestruktur handeln.

Die Fig. 3 zeigt eine Ausführungsform einer Legeeinrichtung 11 im Querschnitt entlang der Linie A - A in Fig. 1. Wie in Fig. 3 gezeigt, weist die Legeeinrichtung 11 mehrere Vakuumbalken 18, 18a, 18b auf, die über eine oder mehrere Verbindungen 28 miteinander verbunden sind. Jeder einzelne Vakuumbalken 18, 18a, 18b weist eine Vakuumkammer 22, 22a, 22b auf, die durch eine Wandung 21, 21 a, 21b begrenzt und definiert wird. Die Vakuumkammern 22, 22a, 22b sind an eine (nicht dargestellte) Vakuumpumpe angeschlossen, welche vorzugsweise kontinuierlich Luft aus den Vakuumkammern 22, 22a, 22b absaugt, so dass in der Vakuumkammern 22, 22a, 22b ein dauerhaftes Vakuum herrscht. Über die Verbindung 28 kann auch eine fluide Verbindung zwischen den Vakuumkammern 22, 22a, 22b ausgebildet sein. Es sei dabei bemerkt, dass hierin der Begriff des Vakuums nicht im Sinne eines idealen, vollständigen Vakuums verwendet wird, was einer vollständigen Abwesenheit von Luft oder anderen Gasen entsprechen würde. Vielmehr wird der Begriff des Vakuums hierin im Sinne eines Unterdrucks verwendet, der insbesondere hinreichend ausgeprägt ist, um eine gewünschte und/oder erforderliche Mindesthaltekraft sicher einhalten zu können. Die Druckdifferenz zwischen der Umgebung und dem in den Vakuumkammern 22, 22a, 22b herrschenden Druck ist dabei geringer 100 mbar, vorzugsweise geringer 75 mbar, besonders bevorzugt geringer 50 mbar.

Wie in der Fig. 3 dargestellt, ist in der Wandung 21, 21a, 21b der jeweiligen Vakuumkammer 22, 22a, 22b zumindest eine Öffnung 23, 23a, 23b ausgebildet, über welche die Vakuumkammern 22, 22a, 22b in Verbindung mit einer weiteren Kammer steht, die der besseren Unterscheidbarkeit halber als Saugkammer 26, 26a, 26b bezeichnet werden soll. Die Saugkammern 26, 26a, 26b sind jeweils in einem seitlich angeordneten Führungselement als einem Verschlusselement ausgebildet. Es ist weiter eine Schieberleiste 24, 24a, 24b vorgesehen, welche im Bereich der zumindest einen Öffnung 23, 23a, 23b der Vakuumkammer 22, 22a, 22b zwischen der Wandung 21, 21a, 21b und dem Führungselement angeordnet ist.

Die Schieberleiste 24, 24a, 24b ist in einer Längsrichtung, welcher sich entlang der Legeeinrichtung 11 bzw. Vakuumeinrichtung 17 in Richtung der Transportrichtung ergibt, verstellbar.

Die Schieberleiste 24, 24a, 24b, welche in Längsrichtung verstellbar ist, ist so positioniert, dass in der Schieberleiste 24, 24a, 24b vorgesehenen Durchlassöffnungen 25, 25a, 25b jeweils mit den Öffnungen 23, 23a, 23b der Vakuumkammer 22, 22a, 22b ausgerichtet sind und diese überdecken. In dieser Stellung steht die Saugkammer 26, 26a, 26b somit in fluider Verbindung mit der Vakuumkammer 22, 22a, 22b, so dass sich auf Grund des in der Vakuumkammer 22, 22a, 22b herrschenden Vakuums bzw. Unterdrucks auch ein entsprechender Unterdruck in der Saugkammer 26, 26a, 26b einstellt.

Auf der, der Vakuumkammer 22, 22a, 22b gegenüberliegenden Seite des Führungselements verläuft das Transportband 12, 12a, 12b in Anlage an dem Führungselement und begrenzt auf dieser Seite die Saugkammer 26, 26a, 26b. In dem Transportband 12, 12a, 12b ist eine Vielzahl von Öffnungen 14 vorgesehen. Aufgrund des in der Saugkammer 26, 26a, 26b herrschenden Unterdrucks entsteht so ein Luftsog durch die Öffnungen 14 in die Saugkammer 26, 26a, 26b hinein. Die in die Saugkammer 26, 26a, 26b einströmende Luft wird über die Durchlassöffnungen 25, 25a, 25b in die Vakuumkammer 22, 22a, 22b eingesaugt und aus dieser von der Vakuumpumpe (nicht dargestellt) abgesaugt. Auf diese Weise erzeugt die durch die Öffnungen 14 am Transportband 12, 12a, 12b einströmende Luft eine Sogwirkung, mittels der ein oder mehrere Tapes 20 (in Fig. 3 nicht dargestellt) an die Transportbänder 12, 12a, 12b angesaugt und an diesem gehalten werden, wobei gleichzeitig die Öffnungen 14 der Transportbänder 12, 12a, 12b von den Tapes 20 überdeckt und somit im Wesentlichen verschlossen werden.

Zur Ablage der Tapes 20 wird die Schieberleiste 24, 24a, 24b in Längsrichtung so verstellt, dass die Durchlassöffnungen 25, 25a, 25b nicht mehr in Überdeckung mit den Öffnungen 23, 23a, 23b sind. Die Schieberleiste 24, 24a, 24b unterbricht somit die fluide Verbindung zwischen der Saugkammer 26, 26a, 26b und der Vakuumkammer 22, 22a, 22b. Um bei gehaltenem Tape 20 das in der Saugkammer 26, 26a, 26b weiterhin verbleibende Vakuum bzw. den weiterhin verbleibenden Unterdruck möglichst rasch abzubauen, ist bevorzugt vorgesehen, dass in dem Führungselement eine Vielzahl von Kanälen 27, 27a, 27b ausgebildet sind, die dauerhaft offen ausgebildet sein können oder mittels eines Verschlussmechanismus im aktiven Zustand bei zur Vakuumkammer 22, 22a, 22b offenen Öffnungen 23, 23a, 23b verschlossen werden können. Bei verschlossenen Öffnungen 23, 23a, 23b strömt nun Luft von außen durch die Kanäle 27, 27a, 27b in die Saugkammer 26, 26a, 26b ein, so dass das dort noch herrschende Vakuum bzw. der dort noch herrschende Unterdruck rasch abgebaut wird. Ein Tape 20 (in Fig. 3 nicht dargestellt), das noch an einem der Transportbänder 12, 12a, 12b gehalten ist, wird daher durch den Abbau des herrschenden Unterdruckes in den Saugkammern 26, 26a, 26b nicht länger an den Transportbändern 12, 12a, 12b gehalten.

Der Aufbau der Legeeinrichtung 11 mit einem modularen System aus Transportbändern 12, 12a, 12b, Umlenkrollen 13, 13a, 13b und Vakuumbalken 18, 18a, 18b bietet insbesondere bei der Handhabung von Tapes 20 unterschiedlicher Breite Vorteile. Sollen beispielsweise nur sehr schmale Tapes 20 mit der Legeeinrichtung 11 auf einem Legetisch 15 abgelegt werden, so kann dies unter Verwendung des Transportbandes 12, angetrieben und geführt um die Umlenkrollen 13, und dem Vakuumbalken 18 erfolgen. Die weiteren Vakuumbalken 18a, 18b können hierbei von der (nicht dargestellten) Vakuumpumpe getrennt werden, so dass diese nur noch ein deutlich kleineres Volumen zu pumpen hat. Durch die Stilllegung der Vakuumbalken 18a, 18b besteht auch nicht die Gefahr, dass diese bei Ablage eines Tapes 20, mittels des ersten Vakuumbalkens 18 und dem ihm zugeordneten Transportband 12, ungewollt bereits abgelegte Tapes 20 von der Tischoberfläche 16 ansaugen. Sollte die Verwendung von mittleren oder breiten Tapes 20 über die Legeeinrichtung 11 erfolgen, so können die einzelnen Vakuumbalken 18a, 18b samt der zugehörigen Transportbänder 12a, 12b modular hinzugeschaltet werden. Der Transport von schmalen und mittleren Tapes 20 kann über einen beliebigen Vakuumbalken 18, 18a, 18b erfolgen, die Auswahl eines Vakuumbalkens 18, 18a, 18b samt dazugehörigem Transportband 12, 12a, 12b war hierbei nur beispielhaft. Es wäre auch weiter denkbar, dass mehrere schmale Tapes 20 mittels einer Legeeinrichtung 11 transportiert und abgelegt werden können.

In Fig. 4 sind zwei Legeeinrichtungen 11 in einer seitlichen Draufsicht dargestellt. Die beiden Legeeinrichtungen 11 sind dabei spiegelbildlich zueinander ausgebildet. Die Umlenkrollen 13, 13a, 13b sind auf einer gemeinsamen Welle 31 gelagert und werden über einen (nicht dargestellten) gemeinsamen Antrieb in Bewegung versetzt. Auf den jeweiligen Umlenkrollen 13, 13a, 13b sind in einem regelmäßigen Muster die Noppen 30 angeordnet, welche bevorzugt halbkugelförmig ausgebildet sind. In diese Noppen 30 können die jeweiligen Öffnungen 14 der Transportbänder 12, 12a, 12b hineingreifen und die Transportbänder 12, 12a, 12b in Bewegung versetzen. Über die gemeinsame Welle 31 kann sichergestellt werden, dass die jeweiligen Umlenkrollen 13, 13a, 13b mit der gleichen Geschwindigkeit drehen und es zu keinem Versatz zwischen den einzelnen Transportbändern 12, 12a, 12b kommt. Die Umlenkrollen 13, 13a, 13b mit der Welle 31 sind über eine gemeinsame Aufhängung 29 verbunden. Zur optimalen Ablage von Tapes 20 mit einer schnellen Zykluszeit ist es vorteilhaft wenn die Tapelegevorrichtung 1 über mehrere Legeeinrichtungen 11 verfügt. Vorzugsweise sind die Legeeinrichtungen 11 dabei wie in Fig. 4 dargestellt so angeordnet, dass zwischen den beiden außenliegenden Umlenkrollen 13 nur ein minimaler Abstand entsteht. Dazu ist die Aufhängung 29 für die Umlenkrollen 13, 13a, 13b so ausgebildet, dass die äußere Umlenkrolle 13 nicht mehr durch die Aufhängung 29 überdeckt wird, sondern frei zugänglich ist. Dieser minimale Abstand zwischen den beiden Legeeinrichtungen 11 erlaubt es zwei Tapes 20 lückenlos auf einem Legetisch 15 gleichzeitig zu platzieren. Die einzelnen Legeeinrichtungen 11 sind für sich jedoch einzeln verfahrbar, so dass auch ein größerer Abstand zwischen den beiden Legeeinrichtungen 11 eingestellt werden kann.

### Bezugszeichenliste P1533

- 1: Tapelegevorrichtung
- 2: Tape-Material
- 3: Spule
- 4: Umlenkrolle
- 5: Puffersystem
- 6: Antriebseinrichtung
- 7: Schneideinrichtung
- 8: Zuführungseinrichtung
- 9: Transportband
- 10: Umlenkrolle
- 11: Legeeinrichtung
- 12, 12a, 12b: Transportband
- 13, 13a, 13b: Umlenkrolle
- 14: Öffnung
- 15: Legetisch
- 16: Tischoberfläche
- 17: Vakuumeinrichtung
- 18, 18a, 18b: Vakuumbalken
- 19: Mittel
- 20: Tape
- 21, 21a, 21b: Wandung
- 22, 22a, 22b: Vakuumkammer
- 23, 23a, 23b: Öffnung
- 24, 24a, 24b: Schieberleiste
- 25, 25a, 25b: Durchlassöffnung
- 26, 26a, 26b: Saugkammer
- 27, 27a, 27b: Kanal
- 28: Verbindung
- 29: Aufhängung
- 30: Noppen
- 31: Welle

## Patentansprüche

1. Tapelegevorrichtung (1), umfassend:
eine Materialzufuhreinheit zum Zuführen von Tapes (20),
eine Legeeinrichtung (11) zum Aufnehmen und zum Platzieren von Tapes (20) auf einem Legetisch (15), wobei die Legeeinrichtung (11) ein Transportmittel (12, 12a, 12b, 13, 13a, 13b) und eine Vakuumeinrichtung (17) umfasst, die Vakuumeinrichtung (17) derart mit dem Transportmittel (12, 12a, 12b, 13, 13a, 13b) verbunden ist, so dass zumindest ein Tape (20) mittels der von der Vakuumeinrichtung (17) erzeugtem Unterdruck an dem Transportmittel gehalten werden kann,
**dadurch gekennzeichnet, dass** das Transportmittel (12, 12a, 12b, 13, 13a, 13b) durch mindestens zwei, um Umlenkrollen (13, 13a, 13b) umlaufende, endlose Transportbänder (12, 12a, 12b) gebildet ist, wobei die Transportbänder (12, 12a, 12b) parallel zueinander in der gleichen Transportebene verlaufen.

2. Tapelegevorrichtung (1) nach Anspruch 1, **dadurch gekennzeichnet, dass** die Transportbänder (12, 12a, 12b) über gemeinsame oder getrennte Umlenkrollen (13, 13a, 13b) geführt sind.

3. Tapelegevorrichtung (1) nach Anspruch 1 oder 2, **dadurch gekennzeichnet, dass** in den Transportbändern (12, 12a, 12b) Öffnungen (14) angeordnet sind, wobei vorzugsweise die Öffnungsfläche der Öffnungen (14) von 10 bis 100 mm², bevorzugt von 25 bis 60 mm² beträgt.

4. Tapelegevorrichtung (1) nach Anspruch 3, **dadurch gekennzeichnet, dass** die Umlenkrollen (13, 13a, 13b) auf Ihrer dem Transportband (12, 12a, 12b) zugewandten Oberfläche Noppen (30) aufweisen.

5. Tapelegevorrichtung (1) nach Anspruch 4, **dadurch gekennzeichnet, dass** die Noppen (30) auf der Umlenkrolle (13, 13a, 13b) und die Öffnungen (14) in den Transportbändern (12, 12a, 12b) derart ausgebildet sind, dass die Noppen (30) in die Öffnungen (14) hineingreifen.

6. Tapelegevorrichtung (1) nach einem der Ansprüche 4 oder 5, **dadurch gekennzeichnet, dass** die Abstände der Noppen (30) auf den Umlenkrollen (13, 13a, 13b) bezogen auf den Wirkdurchmesser mit den Abständen der Öffnungen (14) in den Transportbändern (12, 12a, 12b) übereinstimmen oder die Noppen (30) halbkugelförmig ausgebildet sind.

7. Tapelegevorrichtung (1) nach einem der vorhergehenden Ansprüche, **dadurch gekennzeichnet, dass** die Transportbänder (12, 12a, 12b) auf die gleiche Länge gespannt sind und/oder
die Transportbänder (12, 12a, 12b) aus einem Metall oder einer Legierung mit einer hohen Steifigkeit sind, vorzugsweise Stahl.

8. Tapelegevorrichtung (1) nach einem der vorhergehenden Ansprüche, **dadurch gekennzeichnet, dass** die Vakuumeinrichtung (17) mehrere Vakuumbalken (18, 18a, 18b) umfasst, welche den einzelnen Transportbändern (12, 12a, 12b) zugeordnet sind.

9. Tapelegevorrichtung (1) nach Anspruch 8, **dadurch gekennzeichnet, dass** die Vakuumbalken (18, 18a, 18b) einen Spalt zueinander ausbilden, dessen Breite vorzugsweise veränderbar ist.

10. Tapelegevorrichtung (1) nach Anspruch 9, **dadurch gekennzeichnet, dass** im Spalt zwischen zwei Vakuumbalken (18, 18a, 18b) weitere Mittel (19) angeordnet sind.

11. Tapelegevorrichtung (1) nach einem der Ansprüche 9 oder 10, **dadurch gekennzeichnet, dass** die im dem Spalt zwischen zwei Vakuumbalken (18, 18a, 18b) angeordneten Mittel (19) gebildet sind durch Hefteinheiten zum Anheften von Tapes (20) an eine bereits abgelegte Tapestruktur und/oder Pressmittel zum Andrücken von Tapes (20) auf den Legetisch (15) oder auf eine bereits abgelegte Tapestruktur und/oder Abtrennmittel zum Abtrennen der Tapes (20) von den Transportbändern (12, 12a, 12b) und/oder Erwärmungsmittel zum Erwärmen des abzulegenden Tapes (20) oder der bereits abgelegten Tapestruktur.

12. Tapelegeverfahren, umfassend
Zuführen von Tapes (20) mittels einer Materialzufuhreinheit; und
Aufnehmen und Platzieren von Tapes (20) auf einem Legetisch (15) mittels einer Legeeinrichtung (11), welche ein Transportmittel (12, 12a, 12b, 13, 13a, 13b) und eine Vakuumeinrichtung (17) umfasst, **dadurch gekennzeichnet, dass** zumindest ein Tape (20) mittels der von der Vakuumeinrichtung (17) erzeugtem Unterdruck an dem Transportmittel (12, 12a, 12b, 13, 13a, 13b) gehalten wird, und das Transportmittel (12, 12a, 12b, 13, 13a, 13b) durch mindestens zwei, um Umlenkrollen (13, 13a, 13b) umlaufende, endlose Transportbänder (12, 12a, 12b) gebildet ist, wobei die Transportbänder (12, 12a, 12b) parallel zueinander in der gleichen Transportebene verlaufen.

13. Tapelegeverfahren nach Anspruch 12, **dadurch gekennzeichnet, dass** die Transportbänder (12, 12a, 12b) über gemeinsame oder getrennte Umlenkrollen (13, 13a, 13b) geführt werden.

14. Tapelegeverfahren nach Anspruch 12 oder 13, **dadurch gekennzeichnet, dass** in den Transportbändern (12, 12a, 12b) Öffnungen (14) angeordnet sind, wobei vorzugsweise
die Umlenkrollen (13, 13a, 13b) auf Ihrer dem Transportband (12, 12a, 12b) zugewandten Oberfläche Noppen (30) aufweisen, in welche die Öffnungen (14) der Transportbänder (12, 12a, 12b) hineingreifen.

15. Tapelegeverfahren nach einem der Ansprüche 12 bis 14, **dadurch gekennzeichnet, dass** die Vakuumeinrichtung (17) mehrere Vakuumbalken (18, 18a, 18b) umfasst, welche den einzelnen Transportbändern (12, 12a, 12b) zugeordnet sind, wobei vorzugsweise die einzelnen Vakuumbalken (18, 18a, 18b) je nach Breite der zu transportierenden Tapes (20) zu- und abgeschaltet werden können.

16. Tapelegeverfahren nach Anspruch 15, **dadurch gekennzeichnet, dass** weitere Mittel (19) im Zwischenraum zwischen zwei Vakuumbalken (18, 18a, 18b) horizontal und vertikal verfahren werden können.

## Claims

1. Tape-laying apparatus (1), comprising:
a material supply unit for supplying tapes (20),
a laying device (11) for picking up and for placing tapes (20) on a laying table (15), the laying device (11) comprising a transport means (12, 12a, 12b, 13, 13a, 13b) and a vacuum device (17), the vacuum device (17) being connected to the transport means (12, 12a, 12b, 13, 13a, 13b) in such a way that at least one tape (20) can be held on the transport means by means of the partial vacuum generated by the vacuum device (17),
**characterised in that** the transport means (12, 12a, 12b, 13, 13a, 13b) is formed by at least two endless transport belts (12, 12a, 12b) circulating around guide rollers (13, 13a, 13b), the transport belts (12, 12a, 12b) running parallel to one another in the same transport plane.

2. Tape-laying apparatus (1) according to claim 1, **characterised in that** the transport belts (12, 12a, 12b) are guided over common or separate guide rollers (13, 13a, 13b).

3. Tape-laying apparatus (1) according to claim 1 or 2, **characterised in that** openings (14) are arranged in the transport belts (12, 12a, 12b), the opening surface area of the openings (14) preferably being from 10 to 100 mm², especially from 25 to 60 mm².

4. Tape-laying apparatus (1) according to claim 3, **characterised in that** the guide rollers (13, 13a, 13b) have nubs (30) on their surface that faces towards the transport belt (12, 12a, 12b).

5. Tape-laying apparatus (1) according to claim 4, **characterised in that** the nubs (30) on the guide roller (13, 13a, 13b) and the openings (14) in the transport belts (12, 12a, 12b) are configured in such a way that the nubs (30) engage in the openings (14).

6. Tape-laying apparatus (1) according to either one of claims 4 and 5, **characterised in that** the spacings between the nubs (30) on the guide rollers (13, 13a, 13b), based on the effective diameter, correspond to the spacings between the openings (14) in the transport belts (12, 12a, 12b), or the nubs (30) are of hemispherical shape.

7. Tape-laying apparatus (1) according to any one of the preceding claims, **characterised in that** the transport belts (12, 12a, 12b) are extended to the same length and/or the transport belts (12, 12a, 12b) are made from a metal or an alloy having high rigidity, preferably steel.

8. Tape-laying apparatus (1) according to any one of the preceding claims, **characterised in that** the vacuum device (17) comprises a plurality of vacuum bars (18, 18a, 18b) which are assigned to the individual transport belts (12, 12a, 12b).

9. Tape-laying apparatus (1) according to claim 8, **characterised in that** the vacuum bars (18, 18a, 18b) are arranged with a gap between them, the width of which gap is preferably variable.

10. Tape-laying apparatus (1) according to claim 9, **characterised in that** further means (19) are arranged in the gap between two vacuum bars (18, 18a, 18b).

11. Tape-laying apparatus (1) according to either one of claims 9 and 10, **characterised in that** the means (19) arranged in the gap between two vacuum bars (18, 18a, 18b) are formed by tacking units for tacking tapes (20) to a tape structure that has already been laid and/or pressing means for pressing tapes (20) onto the laying table (15) or onto a tape structure that has already been laid and/or separating means for separating the tapes (20) from the transport belts (12, 12a, 12b) and/or heating means for heating the tapes (20) to be laid or the tape structure that has already been laid.

12. Tape-laying method, comprising
supplying tapes (20) by means of a material supply unit; and
picking up and placing tapes (20) on a laying table (15) by means of a laying device (11) which comprises a transport means (12, 12a, 12b, 13, 13a, 13b) and a vacuum device (17), **characterised in that** at least one tape (20) is held on the transport means (12, 12a, 12b, 13, 13a, 13b) by means of the partial vacuum generated by the vacuum device (17), and the transport means (12, 12a, 12b, 13, 13a, 13b) is formed by at least two endless transport belts (12, 12a, 12b) circulating around guide rollers (13, 13a, 13b), the transport belts (12, 12a, 12b) running parallel to one another in the same transport plane.

13. Tape-laying method according to claim 12, **characterised in that** the transport belts (12, 12a, 12b) are guided over common or separate guide rollers (13, 13a, 13b).

14. Tape-laying method according to claim 12 or 13, **characterised in that** openings (14) are arranged in the transport belts (12, 12a, 12b), the guide rollers (13, 13a, 13b) preferably having nubs (30) on their surface that faces towards the transport belt (12, 12a, 12b), which nubs are engaged by the openings (14) of the transport belts (12, 12a, 12b).

15. Tape-laying method according to any one of claims 12 to 14, **characterised in that** the vacuum device (17) comprises a plurality of vacuum bars (18, 18a, 18b) which are assigned to the individual transport belts (12, 12a, 12b), it preferably being possible for the individual vacuum bars (18, 18a, 18b) to be switched on and off according to the width of the tapes (20) being transported.

16. Tape-laying method according to claim 15, **characterised in that** further means (19) can be moved horizontally and vertically in the intermediate space between two vacuum bars (18, 18a, 18b).

## Revendications

1. Dispositif (1) de pose de rubans, comprenant
une unité d'alimentation en matériau, conçue pour délivrer des rubans (20),
un appareil applicateur (11) dévolu au prélèvement et à la mise en place de rubans (20) sur une table de pose (15), ledit appareil applicateur (11) incluant un moyen de transport (12, 12a, 12b, 13, 13a, 13b) et un appareil (17) générateur de vide, lequel appareil (17) générateur de vide est relié au moyen de transport (12, 12a, 12b, 13, 13a, 13b) de façon telle qu'au moins un ruban (20) puisse être retenu sur ledit moyen de transport à l'aide de la dépression engendrée par ledit appareil (17) générateur de vide,
**caractérisé par le fait que** le moyen de transport (12, 12a, 12b, 13, 13a, 13b) est constitué d'au moins deux bandes transporteuses (12, 12a, 12b) sans fin, tournant autour de rouleaux de renvoi (13, 13a, 13b), lesquelles bandes transporteuses (12, 12a, 12b) s'étendent avec parallélisme mutuel dans le même plan de transport.

2. Dispositif (1) de pose de rubans, selon la revendication 1, **caractérisé par le fait que** les bandes transporteuses (12, 12a, 12b) sont guidées par l'intermédiaire de rouleaux de renvoi (13, 13a, 13b) communs ou distincts.

3. Dispositif (1) de pose de rubans, selon la revendication 1 ou 2, **caractérisé par le fait que** des ouvertures (14) sont pratiquées dans les bandes transporteuses (12, 12a, 12b), l'aire desdites ouvertures (14) mesurant, de préférence, de 10 à 100 mm², préférentiellement de 25 à 60 mm².

4. Dispositif (1) de pose de rubans, selon la revendication 3, **caractérisé par le fait que** les rouleaux de renvoi (13, 13a, 13b) sont pourvus de protubérances (30) sur leur surface tournée vers les bandes transporteuses (12, 12a, 12b).

5. Dispositif (1) de pose de rubans, selon la revendication 4, **caractérisé par le fait que** les protubérances (30) situées sur les rouleaux de renvoi (13, 13a, 13b), et les ouvertures (14) pratiquées dans les bandes transporteuses (12, 12a, 12b), sont conçues de telle sorte que lesdites protubérances (30) pénètrent dans desdites ouvertures (14).

6. Dispositif (1) de pose de rubans, selon l'une des revendications 4 ou 5, **caractérisé par le fait que**, rapportés au diamètre effectif, les espacements des protubérances (30), sur les rouleaux de renvoi (13, 13a, 13b), coïncident avec les espacements des ouvertures (14) dans les bandes transporteuses (12, 12a, 12b), ou bien lesdites protubérances (30) sont de réalisation hémisphérique.

7. Dispositif (1) de pose de rubans, selon l'une des revendications précédentes, **caractérisé par le fait que** les bandes transporteuses (12, 12a, 12b) sont tendues sur la même longueur, et/ou
lesdites bandes transporteuses (12, 12a, 12b) consistent en un métal ou en un alliage doué de haute rigidité, de préférence en de l'acier.

8. Dispositif (1) de pose de rubans, selon l'une des revendications précédentes, **caractérisé par le fait que** l'appareil (17) générateur de vide inclut plusieurs barrettes (18, 18a, 18b) à dépression, associées aux bandes transporteuses (12, 12a, 12b) individuelles.

9. Dispositif (1) de pose de rubans, selon la revendication 8, **caractérisé par le fait que** les barrettes (18, 18a, 18b) à dépression réservent, les unes par rapport aux autres, un espace interstitiel dont la largeur peut être préférentiellement modifiée.

10. Dispositif (1) de pose de rubans, selon la revendication 9, **caractérisé par le fait que** des moyens supplémentaires (19) sont logés dans l'espace interstitiel entre deux barrettes (18, 18a, 18b) à dépression.

11. Dispositif (1) de pose de rubans, selon l'une des revendications 9 ou 10, **caractérisé par le fait que** les moyens (19), logés dans l'espace interstitiel entre deux barrettes (18, 18a, 18b) à dépression, sont formés par des unités d'agrafage conçues pour agrafer des rubans (20) à une structure de rubans déjà déposée ; et/ou par des moyens presseurs conçus pour plaquer des rubans (20) sur la table de pose (15), ou sur une structure de rubans déjà déposée ; et/ou par des moyens séparateurs conçus pour séparer les rubans (20) d'avec les bandes transporteuses (12, 12a, 12b) ; et/ou par des moyens réchauffeurs conçus pour réchauffer le ruban (20) à déposer, ou la structure de rubans déjà déposée.

12. Procédé de pose de rubans, consistant à
délivrer des rubans (20) au moyen d'une unité d'alimentation en matériau ; et
prélever et mettre en place des rubans (20) sur une table de pose (15), au moyen d'un appareil applicateur (11) incluant un moyen de transport (12, 12a, 12b, 13, 13a, 13b) et un appareil (17) générateur de vide, **caractérisé par le fait qu'**au moins un ruban (20) est retenu sur le moyen de transport (12, 12a, 12b, 13, 13a, 13b) à l'aide de la dépression engendrée par l'appareil (17) générateur de vide, et ledit moyen de transport (12, 12a, 12b, 13, 13a, 13b) est constitué d'au moins deux bandes transporteuses (12, 12a, 12b) sans fin, tournant autour de rouleaux de renvoi (13, 13a, 13b), lesquelles bandes transporteuses (12, 12a, 12b) s'étendent avec parallélisme mutuel dans le même plan de transport.

13. Procédé de pose de rubans, selon la revendication 12, **caractérisé par le fait que** les bandes transporteuses (12, 12a, 12b) sont guidées par l'intermédiaire de rouleaux de renvoi (13, 13a, 13b) communs ou distincts.

14. Procédé de pose de rubans, selon la revendication 12 ou 13, **caractérisé par le fait que** des ouvertures (14) sont pratiquées dans les bandes transporteuses (12, 12a, 12b), les rouleaux de renvoi (13, 13a, 13b) étant de préférence pourvus, sur leur surface tournée vers les bandes transporteuses (12, 12a, 12b), de protubérances (30) pénétrant dans lesdites ouvertures (14) desdites bandes transporteuses (12, 12a, 12b).

15. Procédé de pose de rubans, selon l'une des revendications 12 à 14, **caractérisé par le fait que** l'appareil (17) générateur de vide inclut plusieurs barrettes (18, 18a, 18b) à dépression, associées aux bandes transporteuses (12, 12a, 12b) individuelles, les barrettes individuelles (18, 18a, 18b) à dépression pouvant, de préférence, être activées et neutralisées en fonction de la largeur des rubans (20) à transporter.

16. Procédé de pose de rubans, selon la revendication 15, **caractérisé par le fait que** des moyens supplémentaires (19) peuvent être déplacés, horizontalement et verticalement, dans l'espace interstitiel réservé entre deux barrettes (18, 18a, 18b) à dépression.
